# EUROPEAN PATENT APPLICATION

(11) **EP 4 678 508 A1**
(43) Date of publication of application: **14.01.2026**
(21) Application number: 24188283.6
(22) Date of filing: 12.07.2024
(51) Int. Cl.: B62B 3/06, B62B 5/00, B62B 5/04, B60R 19/02, B60T 7/22, B66F 17/00

(54) **AN INDUSTRIAL TRUCK COMPRISING A STANDOFF**

(71) Applicant: Voestalpine Automotive Components Bunschoten B.V., 3751 LJ Bunschoten-Spakenburg (NL)
(72) Inventor: Ausema, Gerhard Hendrik, 3601 CN MAARSSEN (NL)
(74) Representative: 't Jong, Bastiaan Jacob

(57) **Abstract**

The present invention relates to an industrial truck comprising a tiller arm for maneuvering the industrial truck by a pedestrian operator from within an operating zone directly surrounding at least part of the truck, wherein the truck comprises a standoff extending from the truck into the operating zone for indicating proximity of the operator to the truck by tactile feedback.

## Description

The present invention relates to an industrial truck comprising a tiller arm for maneuvering the industrial truck by a pedestrian operator from within an operating zone directly surrounding at least part of the truck.

In industrial settings, such as warehouses or factories, industrial trucks such as for example stackers are extensively used for material handling. These trucks are often motorized to facilitate movement. A tiller arm is employed to allow an operator on foot to steer the truck, which is particularly useful for executing tight maneuvers.

Because the operator must be in close proximity to the truck to steer it, there is a significant risk of personal injury. Operators may get body parts trapped under the truck or between the truck and surrounding objects. Given the heavy loads typically involved, such incidents can result in serious injuries.

It is therefore an object of the present invention to reduce or even obviate the above-mentioned drawback.

This object is achieved according to the invention by providing an industrial truck according to the preamble, characterized in that the truck comprises a standoff extending from the truck into the operating zone for indicating proximity of the operator to the truck by tactile feedback.

By incorporating a standoff extending from the truck into the operating zone, the proximity of the truck to the operator in the operating zone can be indicated by tactile feedback without causing injury. When maneuvering the truck, in which situation attention is typically directed away from the operating zone, the operator can be made aware of dangerously close proximity to the truck before injury is imparted. The standoff thus extend far enough to timely be made aware to take evasive action. Due to tactile feedback being employed, the response can be a natural reflex.

The standoff or guard extends from the truck into the operating zone and preferably extends from the truck along substantially the entire circumference of the truck in the operating zone, so that feedback is obtained by the operator irrespective of the position in the operating zone relative to the truck.

An important benefit of the truck according to the invention, is that the standoff can be produced in a very simple yet very effective manner. There are no electronics required for it to function.

In an embodiment of the industrial truck according to the invention, the standoff is configured for preventing injury on impact with the operator.

Apart form the standoff preventing getting body parts trapped under the truck or between the truck and surrounding objects, the standoff preferably is configured for preventing injury on impact. For example by one or more measures selected from the use of soft materials such as silicone, rubber, or foam for cushioning, employing rounded edges and smooth surfaces and pressure distributing measures such as the distribution of the force of contact over a larger area to reduce pressure on a single point. This prevents minor injury such as for example bruising.

The standoff can for example comprise or be composed of a stiff brush extending into the operating zone.

Also an embodiment of an industrial truck according to the invention, is an industrial truck wherein the standoff extends substantially horizontally.

Since the truck typically moves in the horizontal plane, the standoff extends efficiently in a horizontal plane. The plane preferably extends at a height between the hips and ancles of an average operator, preferably below the average operator knee height.

Also an embodiment of an industrial truck according to invention, is an industrial truck wherein the standoff is elastically deformable.

By incorporating an elastically deformable standoff, the standoff can deform upon contact with a body part of an operator, but also when close proximity to a surrounding object is intended. After the interference is removed, the standoff can spring back and resume normal function.

Yet another embodiment of an industrial truck according to the invention, is an industrial truck wherein the standoff is a hoop.

A hoop naturally has no sharp or pointy parts and is thus suitable for injury-free impact with an operator from any angle of approach.

Also an embodiment of an industrial truck according to the invention, is an industrial truck wherein at least a part of the standoff comprises visibility increasing measures.

By making sure the standoff is easily visible by an operator, further awareness is raised on the possibility of injury upon contact. Visibility increasing measures can for example be passive and applied to the surface of the standoff such as a bright color, a high contrast pattern and/or a reflective surface. Active components such as illumination can also be incorporated.

In yet another embodiment of an industrial truck according to the invention, is an industrial truck where a tiller arm zone is defined by the range in which the tiller arm can be swung around and wherein the standoff extends into the operating zone substantially up to the projection of the perimeter of the tiller arm zone.

By having the standoff extend to approximately the perimeter delimiting the tiller arm zone, the operator remains automatically at a safe distance from the body of the truck. Since the tiller arm zone lays above the standoff, the vertical projection of said perimeter substantially corresponds with the extension of the standoff into the operating zone.

In a preferred embodiment of an industrial truck according to the invention, the truck comprises a main direction of travel and the standoff extends a first distance from the truck in the direction of travel and a smaller second distance from the truck in another direction.

The amount of distance the standoff has from the truck can be varied based on the expected speed of the truck in a certain direction. By decreasing the amount of extension is a direction other than the main direction of travel, the interference of the standoff with normal maneuverability of the truck can be reduced without increasing the risk of injury.

Also another embodiment of an industrial truck according to invention, is an industrial truck comprising a control unit operable to control a travel speed function based on input by the operator, which control unit is coupled with a sensing device for detecting contact with the standoff and is configured to reduce the travel speed upon detecting contact with the standoff.

In an alternative approach to a simple and purely mechanical solution according to the invention, the industrial truck may incorporate a sensing device for detecting contact with the standoff coupled with the speed control of the truck. Instead of solely relying on the reflexes of the operator, the reaction of the industrial truck to the input by the operator can be reduced to automatically slow down the truck. This also functions to prevent damage in case another object or subject than the operator is contacted by the standoff.

In another embodiment of the industrial truck according to the invention, the sensing device is configured for detecting a maximum deformation of the standoff and wherein the control unit is configured to reduce the travel speed to zero upon detecting maximum deformation of the standoff.

By making the industrial truck come to a halt when reaching an amount of deformation of the standoff defined as a maximum allowable deformation, the operation of the truck beyond known unsafe limits can be prevented.

These and other features of the invention are further elucidated with reference to the accompanying drawings.
Figure 1 shows a perspective view of an embodiment of an industrial truck according to the invention.
Figure 2 shows a rear view of the industrial truck of figure 1.
Figure 3 shows a schematic top view of an industrial truck according to the invention.

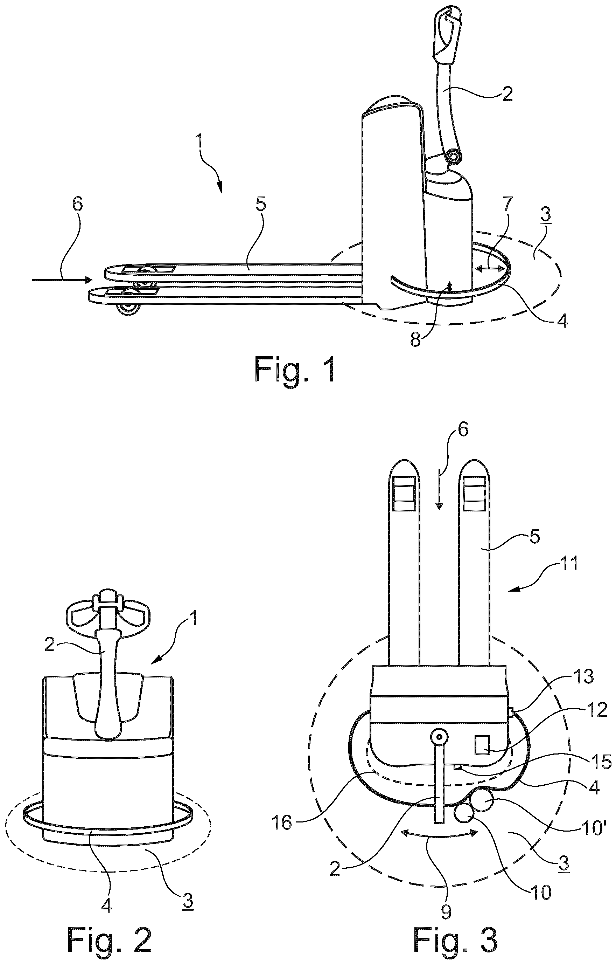

In figure 1 a perspective view of an embodiment of an industrial truck 1 according to the invention is shown, of which a rear view is shown in figure 2. The tiller arm 2 for maneuvering the industrial truck 1 is shown in an upright position. The operating zone 3 directly surrounds the part of the truck 1 around which the tiller arm 2 can extend. A standoff 4 in the form of a hoop extends substantially horizontally into the operating zone 3 at approximate shin-height of an operator. Lifting forks 5 extend along the main direction of travel 6. The standoff 4 extends a first distance 7 from the truck 1 in the direction of travel 6 and a smaller second distance 8 from the truck 1 in another direction. In the direction 6 in which the speed is typically the highest, the standoff 4 will thus come into contact with an operator sooner. In an exemplary embodiment, the first distance 7 can for example lay within a range of 0.4-0.6m, preferably 0.5m. The first distance 7 can optionally be chosen to correspond with the reach of the tiller arm 2. A height of approximately 0.7m corresponds approximately with an upper leg portion of an operator.

Figure 3 schematically depicts an industrial truck 11 according to the invention. Like components are indicated with the same reference numerals as used in figure 1 and 2. The tiller arm 2 can be swiveled as indicated by the arrow 9. In the top view the operating zone 3 clearly delimits the area in which a pedestrian operator moves around while maneuvering the truck 11. Legs 10 of an operator are schematically shown within the operating zone 3. One leg 10' touches the standoff 4, which flexibly deforms to absorb the impact energy to prevent injury to the leg 10'. The tactile feedback triggers the operator to change the input to the truck 11.

An optional control unit 12 is configured which controls the travel speed of the truck 11 based on input by the operator. The control unit 12 is coupled with a sensing device 13 for detecting contact with the standoff 4. Upon detecting such contact, the control unit 12 can then reduce the travel speed of the truck 11. A further optional sensing device 15 is configured for detecting a maximum deformation of the standoff 4. The maximum deformation is defined 16 much closer to the truck 11 and corresponds for example with a length of a foot of an operator. The control unit 12 can reduce the travel speed to zero upon detecting maximum deformation of the standoff 4 to prevent injury. Especially when both sensing devices 13, 16 are incorporated, the safety is even further increased, because due to the response to detecting contact with the standoff 4, the speed can already be reduced far enough to ensure the stopping distance is short enough to reach zero travel speed in time to prevent injury.

## Claims

1. An industrial truck comprising a tiller arm for maneuvering the industrial truck by a pedestrian operator from within an operating zone directly surrounding at least part of the truck, **characterized in that** the truck comprises a standoff extending from the truck into the operating zone for indicating proximity of the operator to the truck by tactile feedback.

2. The industrial truck according to claim 1, wherein the standoff is configured for preventing injury on impact with the operator.

3. The industrial truck according to any one of the preceding claims, wherein the standoff extends substantially horizontally.

4. The industrial truck according to any one of the preceding claims, wherein the standoff is elastically deformable.

5. The industrial truck according to any one of the preceding claims, wherein the standoff is a hoop.

6. The industrial truck according to any one of the preceding claims, wherein at least a part of the standoff comprises visibility increasing measures.

7. The industrial truck according to any one of the preceding claims, wherein a tiller arm zone is defined by the range in which the tiller arm can be swung around and wherein the standoff extends into the operating zone substantially up to the projection of the delimitation of the tiller arm zone.

8. The industrial truck according to any one of the preceding claims, wherein the truck comprises a main direction of travel and wherein the standoff extends a first distance from the truck in the direction of travel and a smaller second distance from the truck in another direction.

9. The industrial truck according to any one of the preceding claims, wherein the truck comprises a control unit operable to control a travel speed function based on input by the operator and wherein the control unit is coupled with a sensing device for detecting contact with the standoff and is configured to reduce the travel speed upon detecting contact with the standoff.

10. The industrial truck according to claim 9, wherein the sensing device is configured for detecting a maximum deformation of the standoff and wherein the control unit is configured to reduce the travel speed to zero upon detecting maximum deformation of the standoff.
